# EUROPÄISCHE PATENTANMELDUNG

(11) **EP 2 157 404 A2**
(43) Veröffentlichungstag der Anmeldung: **24.02.2010**
(21) Anmeldenummer: 09164920.2
(22) Anmeldetag: 08.07.2009
(51) Int. Cl.: G01C 15/00

(54) **Rotationsbaulaser mit Schrittmotor**

(30) Priorität: 06.08.2008 DE 102008041031
(71) Anmelder: HILTI Aktiengesellschaft, 9494 Schaan (LI)
(72) Erfinder: Lukic, Sasha, 9470, Buchs (CH); Ammann, Manfred, 6923, Lauterach (CH)
(74) Vertreter: Söllner, Oliver

(57) **Zusammenfassung**

Ein Rotationsbaulaser (L) weist eine um eine Rotationsachse (A) drehbar gelagerte Umlenkvorrichtung (6) zum Aussenden von Laserlicht sowie einen Schrittmotor (1) zum Drehen der Umlenkvorrichtung um die Rotationsachse auf.

## Beschreibung

Die Erfindung betrifft einen Rotationsbaulaser mit einem zumindest segmentweise rotierenden Laserstrahl.

Rotationsbaulaser mit einem zumindest segmentweise rotierenden Laserstrahl werden vor allem im Baugewerbe eingesetzt, um auf in einer Umgebung des Rotationsbaulasers befindlichen Gegenständen wie beispielsweise Wänden, Decken und/oder Böden eines Raums horizontale, vertikale oder definiert geneigte Ebenen festzulegen und mit durch Projektion des Laserstrahls erzeugten Lasermarkierungen sichtbar zu kennzeichnen.

Bekannte Rotationsbaulaser weisen eine Lasereinheit zum Erzeugen von Laserlicht beispielsweise in Form eines Laserstrahls auf. Weiterhin ist eine Umlenkvorrichtung vorgesehen, welche um eine Rotationsachse drehbar gelagert ist. Die Rotationsachse kann eine Strahlachse des von der Lasereinheit ausgesendeten Laserlichts mindestens in einem Schnittpunkt schneiden und in einem Winkel von beispielsweise 90° umlenken. Durch Drehen der Umlenkvorrichtung um die Rotationsachse kann nun das umgelenkte Laserlicht rotativ von der Rotationsachse ausgehend ausgesendet und auf die in der Umgebung des Rotationsbaulasers befindlichen Gegenständen projiziert werden.

Es ist bekannt, die Umlenkvorrichtung mit Hilfe eines Rotationsmotors um die Rotationsachse zu drehen. Hierzu werden Gleichstrommotoren verwendet, mit denen eine Rotationsbewegung erreicht werden kann.

In vielen Anwendungsfällen genügt es, eine Lasermarkierung nur in einem Teilbereich zu erzeugen, beispielsweise wenn beim Betrieb am Bau nur in einem Teilbereich eines Raums gearbeitet wird. In diesem Fall ist es wünschenswert, in dem Teilbereich möglichst helle Lasermarkierungen mit einer guten Sichtbarkeit zu erzeugen.

Da Rotationsbaulaser häufig unabhängig vom Stromversorgungsnetz mit Hilfe eines Akkumulators (Batterie) betrieben werden, ist gleichzeitig ein geringer Stromverbrauch und damit eine möglichst lange Nutzungsdauer des Rotationsbaulasers anzustreben.

Der Erfindung liegt die Aufgabe zugrunde, einen Rotationsbaulaser anzugeben, der die o.g. Anforderungen erfüllt.

Diese Aufgabe wird durch einen Rotationsbaulaser nach Anspruch 1 und durch ein Verfahren zum Betrieb eines Rotationsbaulasers nach Anspruch 15 gelöst. Weiterentwicklungen der Erfindung sind den abhängigen Ansprüchen zu entnehmen.

Ein Rotationsbaulaser weist eine um eine Rotationsachse drehbar gelagerte Umlenkvorrichtung zum Umlenken von Laserlicht auf. Weiterhin ist ein Schrittmotor zum Drehen der Umlenkvorrichtung um die Rotationsachse vorgesehen.

Durch die Umlenkvorrichtung kann das Laserlicht, welches in einer Laserlichtquelle erzeugt werden kann, umgelenkt werden. Die Laserlichtquelle kann dabei separat von der Umlenkeinrichtung angeordnet sein. Alternativ ist es auch möglich, dass die Laserlichtquelle mit der Umlenkvorrichtung verbunden und/oder Teil der Umlenkvorrichtung ist. In diesem Fall kann die Laserlichtquelle mit der Umlenkvorrichtung drehbar sein.

Zum Umlenken des Laserlichts kann die Umlenkvorrichtung ein Prisma, wie beispielsweise ein Pentaprisma, aufweisen, durch welches das einfallende Laserlicht in einem vorgegebenen Winkel, wie beispielsweise 90°, umgelenkt werden kann.

Eine Strahlachse des Laserlichts kann dabei die Rotationsachse in einem Schnittpunkt schneiden oder mit der Rotationsachse zusammenfallen. Bei einem Drehen der Umlenkvorrichtung um die Rotationsachse kann das Laserlicht, beispielsweise durch das rotierende Prisma, rotativ von der Rotationsachse ausgehend ausgesendet werden. So kann beispielsweise bei einem Umlenken eines durch das Laserlicht gebildeten Laserstrahls mit einem Umlenkwinkel von im Wesentlichen 90° ein rotativ von der Rotationsachse abgehender Laserstrahl erzeugt werden, welcher eine zur Rotationsachse senkrecht stehende Rotationsebene durchfahren kann.

Bei einem Betrieb des Rotationsbaulasers können auf Gegenständen in der Umgebung des Rotationsbaulasers durch eine Projektion des Laserstrahls sichtbare Lasermarkierungen erzeugt werden. Diese Markierungen entstehen an Projektionspunkten in einem Schnittpunkt der Rotationsebene mit einer durch eine Oberfläche der Gegenstände gebildeten Projektionsfläche. Die Projektionspunkte können aufgrund einer Lage der Rotationsachse und eines Drehwinkels der Umlenkvorrichtung, aus welchem sich ein Belichtungswinkel des ausgesendeten Laserlichts ergibt, nach den Gesetzen der Geometrie bestimmt werden.

Durch die Verwendung des Schrittmotors zum Drehen der Umlenkvorrichtung um die Rotationsachse kann die Bewegung der Umlenkvorrichtung und damit der Austrittswinkel des abgehenden Laserstrahls geeignet gesteuert werden.

Ein Schrittmotor, auch als Stepper-Motor bekannt, ist ein Synchronmotor, welcher ein rotatives Antriebsmoment durch ein gesteuertes, schrittweise rotierendes elektromagnetisches Feld erzeugen kann. Das elektromagnetische Feld kann von fest im Schrittmotor positionierten Statorspulen erzeugt werden und durch Änderung der Bestromung der Statorspulen verändert werden. Hierdurch kann eine Drehung beispielsweise eines Permanentmagneten um einen minimalen Schrittwinkel oder ein Vielfaches des Schrittwinkels erreicht werden. Darüber hinaus können Schrittmotoren mit einem gleichförmigen Drehfeld betrieben werden und so ein gleichmäßiges, rotatives Antriebsmoment erzeugen.

Da die Drehung im Wesentlichen exakt dem durch die Statorspulen erzeugten Feld folgt, können Schrittmotoren ohne Sensoren zur Positionsrückmeldung wie Drehgeber und ohne weitere Bauteile wie Kommutatoren betrieben werden. Schrittmotoren sind daher qualitativ hochwertig und robust sowie gleichzeitig kostengünstig.

Ein Rotationsbaulaser kann einen Schrittmotor mit einem Rotor zum Erzeugen des Antriebsmoments aufweisen. Weiterhin kann eine Steuervorrichtung zum Ansteuern des Schrittmotors vorgesehen sein. Das Ansteuern kann durch eine Steuervorgabe geschehen, welche einen Drehwinkel und/oder eine Drehrichtung und/oder eine Anzahl von Drehschritten für den Rotor vorgibt.

Wegen des durch die Statorspulen erzeugten rotierenden elektromagnetischen Feldes kann ein durch eine Steuervorgabe vorgegebener Drehwinkel, welcher beispielweise einem Vielfachen eines minimalen Schrittwinkels des Schrittmotors entsprechen kann, einfach in ein rotatives Antriebsmoment mit entsprechendem Winkel umgesetzt werden. Eine Änderung der Drehrichtung des Antriebsmoments kann durch Anpassung des elektromagnetischen Feldes erreicht werden. Die Verwendung eines Schrittmotors ermöglicht daher ein Umsetzen der als Steuervorgabe durch die Steuereinheit vorgegebenen Drehwinkel, Drehrichtungen und Drehschritte. Die Lasermarkierungen können daher schrittweise erzeugt und verändert werden.

Bei einem Rotationsbaulaser kann die Steuervorrichtung eine Steuersequenz mit einer oder mehreren Steuervorgaben regelmäßig und mit einer vorgebbaren Repetierfrequenz wiederholen. Hierdurch kann sich eine Lasermarkierung mit einem gewünschten Markierungsmuster ergeben. Eine derartige Betriebsart des Rotationsbaulasers wird als "Scanbetrieb" oder "Scannen" bezeichnet.

Beispielsweise kann durch eine Steuersequenz, welche eine Änderung der Drehrichtung bei gleichbleibendem Drehwinkel vorgibt, und welche mit einer geeigneten Repetierfrequenz wiederholt wird, beispielsweise eine linienförmige Lasermarkierung einer gleichbleibenden Länge erzeugt werden. Die Repetierfrequenz gibt dabei eine Wiederholrate für das Ansteuern des Schrittmotors mit der Steuersequenz an. So kann ein Hin- und Herbewegen der Umlenkvorrichtung in dem vorgegebenen Drehwinkel erreicht werden, die mit der vorgegebenen Repetierfrequenz wiederholt wird. Dies bewirkt eine gleichmäßige Ausleuchtung des Drehwinkels, durch die auf einer Projektionsfläche in der Umgebung des Rotationsbaulasers als Lasermarkierung ein Linienabschnitt mit gleichmäßiger Sichtbarkeit erzeugt wird. Durch die Konzentration des Laserlichts auf den Linienabschnitt kann eine gute Sichtbarkeit der Lasermarkierung erreicht werden.

Weiterhin ist es möglich, durch eine geeignete Steuersequenz Lasermarkierungen zu erzeugen, welche Markierungsabschnitte aufweisen, die eine verstärkte Sichtbarkeit haben und somit heller erscheinen als andere Abschnitte. Dies kann beispielsweise durch eine Steuersequenz erreicht werden, die ein Hin- und Herbewegen der Umlenkvorrichtung bei der Erzeugung der Markierungsabschnitte vorgibt. So kann bewirkt werden, dass das Laserlicht in der Steuersequenz häufiger in den entsprechenden Markierungsabschnitt projiziert wird. Hierdurch kann ein vorgebbarer Teil der Energie des Laserlichts auf den entsprechenden Markierungsabschnitt konzentriert werden.

Ebenso ist es möglich, die Markierungsabschnitte durch ein Verlangsamen des Drehens der Umlenkvorrichtung in einem entsprechenden Bereich stärker zu belichten. So ist es möglich, für vorbestimmte Winkelbereiche unterschiedliche Drehgeschwindigkeiten derart vorzugeben, dass das ausgesendete Laserlicht Abschnitte der Markierung jeweils langsamer oder schneller durchläuft. Durch ein langsameres Durchlaufen eines vorgegebenen Drehwinkelabschnitts wird die Energie des ausgesendeten Laserlichts auf den gegebenen Drehwinkelabschnitt konzentriert, wodurch eine verbesserte Sichtbarkeit des jeweiligen Markierungsabschnitts erreicht wird. Der jeweilige Markierungsabschnitt erscheint somit heller als andere Abschnitte der Lasermarkierung, die vom Laserlicht mit einer höheren Drehgeschwindigkeit durchlaufen werden.

Durch das reflektierte Laserlicht kann so eine Lasermarkierung mit mehreren, in einer Linie liegenden Markierungsabschnitten unterschiedlicher Helligkeit erzeugt werden.

Durch die Verwendung eines Schrittmotors ist eine exakte Ansteuerung und Umsetzung der Drehbewegung möglich. Hierdurch kann bei der Erzeugung der Markierungsmuster ein Flackern beispielsweise an den Enden der Lasermarkierung oder der Markierungsabschnitte, welches durch ein Umschalten der Drehrichtung und das dafür erforderliche Abbremsen bei Verwendung eines Gleichstrommotors entstehen kann, verhindert werden. Ebenso kann durch die exakte Umsetzung der Steuersequenz durch den Schrittmotor auch ein "Wandern" der Lasermarkierungen verhindert werden, also eine örtliche Verschiebung der Projektion an einer festen Projektionsfläche über einen Betrachtungszeitraum. Das Wandern kann beispielsweise bei Verwendung eines nicht geeigneten Antriebs durch Verschiebungen des Drehwinkels der Umlenkvorrichtung bei geringen Abweichungen der Drehbewegung des Rotors von den Vorgaben der Steuersequenz entstehen.

Durch Verwenden einer geeigneten Steuersequenz und Vorgabe einer geeigneten Repetierfrequenz kann eine gute Sichtbarkeit der Markierung auch bei Verwendung eines schwachen Lasers erreicht werden. Es ist daher möglich, den Rotationsbaulaser mit einer vergleichsweise schwachen und damit auch kostengünstigen Laserlichtquelle auszustatten. So kann ein Rotationsbaulaser mit einem kostengünstigen herkömmlichen Laser ausgestattet werden, welcher lichtschwächer sein kann als beispielsweise ein vergleichsweise teurer grüner Laser, welcher zudem einen hohen Stromverbrauch hat. Die Verwendung einer schwachen Laserlichtquelle ist förderlich für die Sicherheit beim Einsatz des Rotationsbaulasers am Bau, da Laserlicht mit einer höheren Energie beispielsweise eine Gefahr für das Auge eines Betrachters beim Blicken in den Strahl darstellen kann. Somit können gesetzliche Vorgaben für maximal erlaubte Laserlichtstärken problemlos erfüllt werden.

Bei einem Rotationsbaulaser kann die Repetierfrequenz derart vorgegeben sein, dass eine durch das ausgesendete Laserlicht erzeugte Markierung für das menschliche Auge als im Wesentlichen flimmerfrei wahrnehmbar ist. Hierzu kann die Repetierfrequenz beispielsweise im Wesentlichen aus einem Bereich von einem Sequenzdurchlauf pro Sekunde bis zu 20 Sequenzdurchläufen pro Sekunde gewählt sein. Eine mit einer entsprechenden Frequenz wiederholte Belichtung der Lasermarkierung kann durch das Auge des Betrachters nicht erfasst werden, wodurch die Markierung als flimmerfrei und ohne ein Flackern an den Enden wahrnehmbar ist. Eine Belichtung erfolgt daher "mit einer höheren Auflösung als die Auflösung des menschlichen Auges".

Eine Umsetzung einer mit einer derartigen Repetierfrequenz wiederholten Steuersequenz kann durch den Schrittmotor mit einer derart hohen Genauigkeit in eine Drehbewegung der Umlenkvorrichtung umgesetzt werden, dass die Sichtbarkeit der erzeugten Lasermarkierung signifikant besser ist als bei Erzeugung mit anderen Antrieben.

In einer weiteren Ausführungsform kann ein Übertragungsriemen vorgesehen sein, welcher ein durch den Schrittmotor erzeugtes Drehmoment auf die Umlenkvorrichtung übertragen kann. Für die Übertragung können verschiedene Riemenarten verwendet werden, wie beispielsweise Flachriemen, Keilriemen, Keilrippenriemen, Zahnriemen oder Rundriemen. Die Riemenführung kann entsprechend einer baulichen Gestaltung des Rotationsbaulasers gewählt werden. Durch die Verwendung des Übertragungsriemens kann eine Laufruhe beim Drehen der Umlenkvorrichtung auch bei hohen Repetierfrequenzen und/oder bei Steuersequenzen mit häufigen Wechseln der Drehrichtung und/oder der Drehgeschwindigkeit erreicht werden. Vibrationen, die beispielsweise bei Änderungen der Drehgeschwindigkeit oder der Drehrichtung auftreten können, können so gedämpft und Lärm vermieden werden. Eine Vorrichtung zum Einstellen und Anpassen der Riemenspannung kann vorgesehen werden.

In einer Ausführungsform dieser Variante kann der Rotor mit einer Antriebswelle gekoppelt sein, wobei die Antriebswelle eine erste Riemenscheibe aufweist. Die Umlenkvorrichtung kann eine Rotationswelle mit einer zweiten Riemenscheibe aufweisen. In dieser Ausführungsform kann der Übertragungsriemen das Drehmoment von der ersten Riemenscheibe auf die zweite Riemenscheibe übertragen.

Durch eine geeignete Wahl der Durchmesser der Riemenscheiben kann eine Drehzahl der Umlenkvorrichtung flexibel auf die Drehzahl des Schrittmotors angepasst werden. Auch der Abstand von der Antriebswelle zur Rotationswelle kann entsprechend der baulichen Gestaltung des Rotationsbaulasers gewählt werden. Weiterhin können Kugellager zur Lagerung der Rotationswelle und der Antriebswelle vorgesehen sein, die die Laufeigenschaften weiter verbessern.

In einer weiteren Variante dieser Ausführungsform kann als Übertragungsriemen ein Kerbzahnriemen gewählt werden. Die erste und die zweite Riemenscheibe können jeweils durch Zahnriemenscheiben gebildet sein.

Die Verwendung eines Kerbzahnriemens, welcher das Drehmoment über die Zahnriemenscheiben übertragen kann, ermöglicht eine präzise Übertragung des Drehmoments durch eine formschlüssige Kopplung zwischen dem Übertragungsriemen und der ersten und zweiten Riemenscheibe. So kann eine hohe Laufruhe mit geringem Verschleiß bei gleichzeitig präziser Steuerung erreicht werden.

In einer Variante dieser Ausführungsform kann eine erste Anzahl von Zähnen der ersten Zahnriemenscheibe und eine zweite Anzahl von Zähnen der zweiten Zahnriemenscheibe derart gewählt sein, dass ein Untersetzen einer Drehzahl des Rotors erreicht wird. Beispielsweise kann ein Untersetzen im Wesentlichen von 20:60 erreicht werden. Dies ermöglicht ein Umsetzen der Drehzahl des Schrittmotors in eine Drehzahl zum Drehen der Umlenkvorrichtung, welche das Erzeugen von Lasermarkierungen mit hoher Sichtbarkeit ermöglicht.

Ein Rotationsbaulaser kann weiterhin eine Überwachungsvorrichtung aufweisen, welche als Drehsensor eine Rotation der Umlenkvorrichtung überwacht. Beispielsweise kann eine Überwachung der Rotation der durch den Schrittmotor angetriebenen Antriebswelle oder der Rotationswelle während des Betriebs des Rotationsbaulasers vorgenommen werden. Dies ermöglicht es, den Schrittmotor auch mit beispielsweise im Vergleich zu einem Nennstrom niedrigem Strom und mit minimalem Moment zu betreiben. Ein solcher Betrieb des Schrittmotors "am Verhungern" ermöglicht es, den Rotationsbaulaser mit geringem Stromverbrauch zu betreiben und so eine längere Nutzungsdauer des Rotationsbaulasers beispielsweise im Akkubetrieb zu ermöglichen.

In einer Ausführungsform weist die Überwachungsvorrichtung eine mit der Rotationswelle oder der Antriebswelle gekoppelte Codierscheibe mit optischer, elektrischer, magneto-elektrischer oder mechanischer Abtastung auf. Die Codierscheibe kann als Drehgeber fungieren und beispielsweise für einen zurückgelegten Drehwinkel der Rotationswelle und/oder der Antriebswelle vorbestimmte Impulse abgeben. Die Anzahl der Impulse kann als ein Maß für den zurückgelegten Drehwinkel verwendet werden. Hierfür kann die Codierscheibe fest auf der Antriebswelle oder der Rotationswelle montiert werden. Sie kann beispielsweise in einzelne Segmente aufgeteilt sein, die mit einer Segmentmarkierung versehen sein können. Ein Sensor kann die Segmentmarkierung erkennen und so ein Bestimmen des durch die Codierscheibe durchlaufenen Drehwinkels ermöglichen.

Beispielsweise können einzelne Segmente der Codierscheibe abwechselnd lichtdurchlässig bzw. lichtundurchlässig sein. Ein von einer Lichtquelle auf einer Seite der Codierscheibe ausgesendetes Abtastlicht kann die Codierscheibe durchleuchten. Das durch die Codierscheibe modulierte Licht kann auf der anderen Seite der Codierscheibe durch Lichtsensoren empfangen werden. Dies ermöglicht einen Rückschluss auf die Position der Codierscheibe. Alternativ oder zusätzlich ist es möglich, dass die Codierscheibe elektrische oder magnetische Pulse sendet, die durch entsprechende Sensoren abgetastet werden. Auch eine mechanische Abtastung ist möglich.

In einer weiteren Variante dieser Ausführungsform ist eine Regelungsvorrichtung zum Regeln der Rotation der Umlenkvorrichtung auf Basis eines Signals der Überwachungsvorrichtung vorgesehen. Dies ermöglicht es, die Rotation der Umlenkvorrichtung anzupassen, wenn erkannt wurde, dass ein Drehen der Umlenkvorrichtung unterblieben ist, beispielsweise weil der Schrittmotor einzelne Steuervorgaben nicht umgesetzt hat.

In einer Variante dieser Ausführungsform kann das Regeln der Rotation der Umlenkvorrichtung durch Anpassen einer Stromstärke des dem Schrittmotor zugeführten Stroms und/oder durch Vorgeben einer Korrektursequenz, welche eine oder mehrere Steuervorgaben umfasst, durch die Steuervorrichtung vorgenommen werden.

Das Anpassen der Stromstärke kann beispielsweise dann notwendig sein, wenn dem Schrittmotor derart wenig Strom zugeführt wurde, dass einzelne Steuervorgaben nicht umgesetzt werden, da das von den Statorspulen erzeugte elektrische Feld zur Bewegung des Rotors zu schwach war. In diesem Fall kann durch die Regelungsvorrichtung die dem Schrittmotor zugeführte Stromstärke derart erhöht werden, dass das durch die Statorspulen erzeugte elektrische Feld stark genug zum Drehen des Rotors ist.

Beispielsweise kann die dem Schrittmotor zugeführte Stromstärke abhängig von Umgebungsbedingungen bei einem Betrieb des Rotationsbaulasers sein. So ist es möglich, dass bei einem Einsatz in einer kalten Umgebung Schmierstoffe zäher und Lager schwergängiger sind als beim Einsatz in einer warmen Umgebung. Beim Einsatz in einer kalten Umgebung kann es daher notwendig sein, die dem Schrittmotor zugeführte Stromstärke höher zu wählen als beim Einsatz in einer warmen Umgebung.

Das Anpassen der Stromstärke kann beispielsweise durch Zu- oder Abschalten von Widerstandskaskaden vorgenommen werden. Möglich ist auch eine Anpassung der zuzuführenden Energie durch die Steuerung der Pulsweite, d.h. durch die Einschaltdauer innerhalb des Taktes (Pulsdauer).

Das Anpassen der Stromstärke ermöglicht es, den Schrittmotor mit möglichst geringem Stromverbrauch zu betreiben. So kann die Stromstärke zunächst vermindert werden, bis ein vorgegebener Schwellwert erreicht ist oder die Überwachungsvorrichtung das Ausbleiben von Schritten bei der Rotation der Umlenkvorrichtung signalisiert. Nach dem Ausbleiben von Schritten kann eine geringfügige Erhöhung der Stromstärke sinnvoll sein.

Durch das Regeln der Stromstärke ist es möglich, den Rotationsbaulaser mit möglichst geringem Stromverbrauch zu betreiben und so eine möglichst lange Nutzungsdauer beispielsweise im Akkubetrieb zu erreichen.

Wenn durch die Überwachungsvorrichtung erkannt wurde, dass einzelne Steuervorgaben nicht in eine entsprechende Drehung der Umlenkvorrichtung umgesetzt wurden, kann es sinnvoll sein, die Position der Umlenkvorrichtung zu korrigieren. Hierzu kann die Korrektursequenz verwendet werden, mit welcher der Schrittmotor eine Position der Umlenkvorrichtung korrigieren kann. So kann beispielsweise nach einem Ausbleiben von Drehschritten des Schrittmotors eine durch den Rotationsbaulaser erzeugte Lasermarkierung verschoben projiziert werden, bis eine erneute Ausrichtung der Umlenkvorrichtung durch die Korrektursequenz erreicht wird. Auch eine Veränderung des Timings kann durch die Korrektursequenz erreicht werden. Dadurch können wahrnehmbare Störungen bei einer Projektion der Lasermarkierung verhindert werden.

In einer Ausführungsform kann die Regelungsvorrichtung ganz oder teilweise in die Steuervorrichtung integriert sein. Das heißt, die Steuervorrichtung kann als Regelungsvorrichtung bezeichnet bzw. angesehen werden. Die Integration der Regelvorrichtung in die Steuervorrichtung ermöglicht einen einfachen Aufbau des Rotationsbaulasers, da wenig Bauraum benötigt wird und so eine einfache Kontaktierung und Stromversorgung beider Vorrichtungen und eine einfache Signalübermittlung zwischen den Vorrichtungen ermöglicht wird.

In einer weiteren Ausführungsform der Erfindung, kann ein Rotationsbaulaser mit einer um eine Rotationsachse drehbar gelagerten Umlenkvorrichtung zum Aussenden eines Laserstrahls und einem Schrittmotor zum Drehen der Umlenkvorrichtung um die Rotationsachse mit einem Verfahren betrieben werden, welches ein Ansteuern des Schrittmotors durch regelmäßiges und mit einer vorgebbaren Repetierfrequenz wiederholtes Vorgeben einer Steuersequenz umfasst. Die Steuersequenz kann eine oder mehrere Steuervorgaben des Drehwinkels und/oder einer Drehrichtung und/oder eine Drehgeschwindigkeit und/oder eine Anzahl von Drehschritten für den Schrittmotor umfassen. Die Steuersequenz und die Repetierfrequenz können derart gewählt sein, dass beim Drehen der Umlenkvorrichtung um die Rotationsachse das Laserlicht einen oder mehrere vorbestimmte Ausleuchtungsbereiche häufiger und/oder langsamer durchläuft als andere Bereiche. Die Ausleuchtungsbereiche können dabei durch Vorgabe der entsprechenden Belichtungswinkel in der Rotationsebene beschrieben sein.

Ein Ausleuchtungsbereich kann beispielsweise häufiger durchlaufen werden als ein anderer Bereich, wenn das zu einem Laserstrahl gebündelte Laserlicht in dem Ausleuchtungsbereich mehrfach hin und her bewegt wird, während andere Bereiche nur einmal oder gar nicht durchlaufen werden. Ein Ausleuchtungsbereich kann langsamer durchlaufen werden als andere Bereiche, wenn die Drehgeschwindigkeit der Umlenkvorrichtung in dem Ausleuchtungsbereich vermindert wird.

Durch ein häufiges oder langsames Durchlaufen des Ausleuchtungsbereichs kann die Energie des Laserlichts in dem Ausleuchtungsbereich konzentriert werden, sodass eine in dem Ausleuchtungsbereich erzeugte Lasermarkierung heller erscheint und eine bessere Sichtbarkeit hat als in andere Bereiche.

Es ist möglich, vorbestimmte Ausleuchtungsbereiche ausschließlich und andere Bereiche gar nicht zu durchlaufen. Alternativ oder zusätzlich ist es möglich, vorbestimmte Ausleuchtungsbereiche häufiger und/oder langsamer zu durchlaufen als andere Bereiche. Hierdurch können Lasermarkierungen erzeugt werden, welche aus Markierungsabschnitten unterschiedlicher Helligkeit zusammengesetzt sind.

Das Verfahren zum Betrieb des Rotationsbaulasers mit dem Schrittmotor erlaubt durch die technischen Möglichkeiten des Schrittmotors kontrollierte Drehbewegungen mit vorgegebenen Rotationsgeschwindigkeiten in vorgegebenen Rotationswinkelbereichen. Hierdurch kann bei geeigneter Wahl der Repetierfrequenz, also der Wiederholrate für die Steuersequenz, erreicht werden, dass die Lasermarkierung durch das menschliche Auge des Betrachters als stehende, im Wesentlichen flimmerfrei wahrgenommen wird. So kann eine signifikant bessere Sichtbarkeit der erzeugten Lasermarkierungen als bei einer Erzeugung ähnlicher Markierungen mit anderen Antrieben erreicht werden.

Eine Ausführungsform des Verfahrens umfasst weiterhin ein Überwachen des Drehens der Umlenkvorrichtung und ein Erhöhen der Stromstärke des dem Schrittmotor zugeführten Stroms, wenn das Drehen der Umlenkvorrichtung nicht der Steuersequenz entspricht.

Durch das Überwachen des Drehens der Umlenkvorrichtung kann erkannt werden, dass das Drehen der Umlenkvorrichtung nicht der Steuersequenz entspricht. Die kann dadurch verursacht sein, dass der Schrittmotor wegen einer zu geringen Stromversorgung einzelne Steuervorgaben nicht umsetzen kann. In diesem Fall kann die Stromstärke des dem Schrittmotor zugeführten Stroms erhöht werden. Dies ermöglicht es, den dem Schrittmotor zugeführten Strom auf einen geringen Wert zu regeln und so eine möglichst lange Nutzungsdauer des Rotationsbaulasers beispielsweise im Akkubetrieb zu ermöglichen.

Eine Ausführungsform des Verfahrens kann weiterhin das Überwachen des Drehens der Umlenkvorrichtung umfassen. Weiterhin kann ein Ansteuern des Schrittmotors durch eine Korrektursequenz von Steuervorgaben vorgenommen werden, wenn das Drehen der Umlenkvorrichtung nicht der Steuersequenz entspricht. Die Korrektursequenz kann derart gewählt sein, dass für ein menschliches Auge wahrnehmbare Störungen verhindert und/oder korrigiert werden. Dies ermöglicht es, nach dem Ausbleiben von Schritten des Schrittmotors eine eventuelle Verschiebung der durch das Laserlicht erzeugten Markierung beispielsweise durch eine Rückverschiebung zu korrigieren.

Diese und weitere Merkmale der Erfindung werden nachfolgend anhand von Beispielen unter Zuhilfenahme der begleitenden Figuren näher erläutert. Es zeigen:
- **Fig. 1**: Bauteile eines Rotationsbaulasers mit Schrittmotor;
- **Fig. 2**: ein Flussdiagramm zur Illustration eines Verfahrens zum Betrieb ei- nes Rotationsbaulasers mit Schrittmotor; und
- **Fig. 3**: eine mit einem Rotationsbaulaser mit Schrittmotor erzeugbare Mar- kierung.

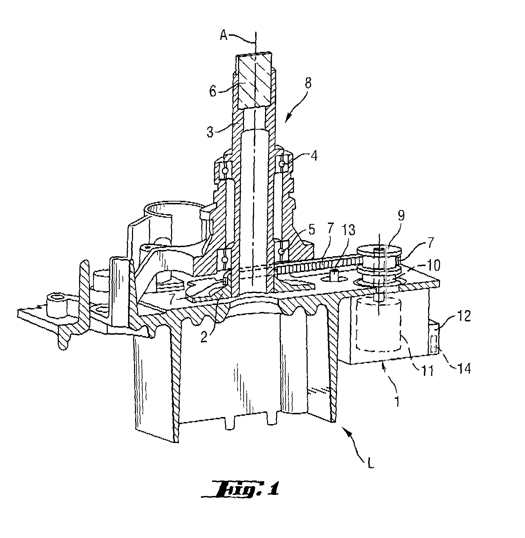

Fig. 1 zeigt schematisch Bauteile eines Rotationsbaulasers mit Schrittmotor und deren Zusammenwirken. Ein Schrittmotor 1 kann ein Antriebsmoment mit Hilfe eines Kerbzahnriemens (nicht dargestellt) auf eine Zahnriemenscheibe 2 übertragen. Die Zahnriemenscheibe 2 ist Teil einer Umlenkvorrichtung eines Rotationsbaulasers und mit der Umlenkvorrichtung fest gekoppelt. Das Antriebsmoment des Schrittmotors 1 kann somit über die Zahnriemenscheibe 2 auf eine Rotationswelle 3 der Umlenkvorrichtung übertragen werden, welche mit den Kugellagern 4 und 5 gelagert ist. An der Rotationswelle 3 ist ein Prisma 6 angeordnet, durch welches Laserlicht umgelenkt werden kann. Bei einer Rotation der Rotationswelle 3 kann das Prisma 6 das Laserlicht als rotativ von einer Rotationsachse der Umlenkvorrichtung abgehenden Laserstrahl aussenden. Durch den Laserstrahl können an Projektionsflächen, die beispielsweise durch Oberflächen von den Rotationsbaulaser umgebenden Gegenständen gebildet sein können, Lasermarkierungen erzeugt werden.

Durch die Verwendung des Schrittmotors 1 zum Erzeugen des Antriebsmoments kann eine weitgehend exakte Umsetzung einer Steuervorgabe eines Drehwinkels und/oder einer Drehrichtung und/oder einer Drehgeschwindigkeit und/oder einer Anzahl von Schritten für die Rotationswelle 3 und damit für das Aussenden des Laserlichts erreicht werden. Durch ein Ansteuern des Schrittmotors 1 mit einer Steuersequenz bestehend aus einer oder mehreren Steuervorgaben und durch eine Wiederholung der Steuersequenz mit einer vorgebbaren Repetierfrequenz kann durch den von der Umlenkvorrichtung ausgesendeten Laserstrahl eine Lasermarkierung erzeugt werden, welche einen oder mehrere Markierungsabschnitte mit unterschiedlicher Helligkeit aufweisen kann.

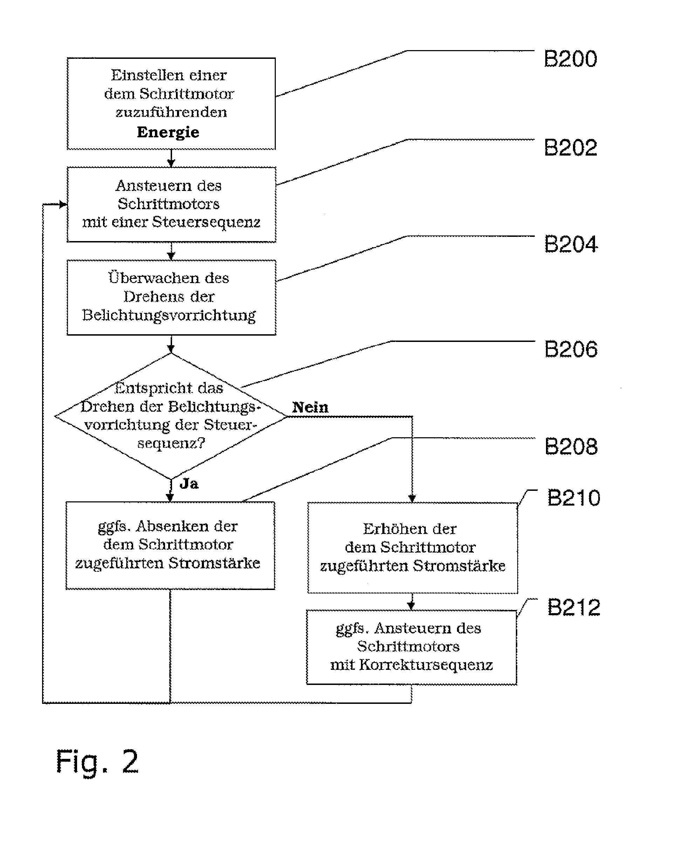

Fig. 2 illustriert ein Verfahren zum Betrieb eines Rotationsbaulasers wie in Fig. 1 dargestellt.

In B200 wird eine dem Schrittmotor 1 zuzuführende Energie eingestellt. Die Stromstärke kann entsprechend einer festen Herstellervorgabe, einer Benutzerauswahl oder im Hinblick auf einen Ladezustand eines versorgenden Akkumulators bestimmt sein.

In B202 wird der Schrittmotor 1 mit einer Steuersequenz angesteuert. Die Steuersequenz kann entsprechend einer festen Herstellervorgabe oder einer Bedienerauswahl festgelegt und derart beschrieben sein, dass sie zur Erzeugung einer Lasermarkierung geeignet ist. Die Steuersequenz bewirkt, dass der Schrittmotor 1 über den Kerbzahnriemen ein der Steuersequenz entsprechendes Antriebsmoment auf die Zahnriemenscheibe 2 und damit auf die Rotationswelle 3 und das Prisma 6 überträgt. Dies führt zum Drehen der Umlenkvorrichtung entsprechend der Steuersequenz. Die Steuersequenz kann in einer nicht dargestellten Iteration mit einer vorgegebenen Repetierfrequenz wiederholt werden.

In B204 wird das Drehen der Umlenkeinheit kontinuierlich überwacht. Hierbei kann geprüft werden, ob das Drehen der Umlenkvorrichtung der Steuersequenz entspricht.

Basierend auf einem Überwachungsergebnis wird in B206 entschieden, mit welchen Schritten das Verfahren fortgesetzt wird.

Wenn das Drehen der Umlenkvorrichtung der Steuersequenz entspricht, kann daraus gefolgert werden, dass der Schrittmotor 1 ausreichend mit Strom versorgt is. In diesem Fall kann gegebenenfalls, wie in B208 dargestellt, die dem Schrittmotor 1 zugeführte Stromstärke weiter abgesenkt werden, um den Schrittmotor 1 mit einem möglichst geringen Stromverbrauch zu betreiben. Ein Absenken kann beispielsweise im Hinblick auf eine verbleibende Laufzeit oder einen Füllstand des Akkumulators vorgenommen werden. Im Anschluss daran kann ein erneutes Ansteuern des Schrittmotors 1, wie in B202 dargestellt, vorgenommen werden.

Falls in B206 festgestellt wurde, dass ein Drehen der Umlenkvorrichtung nicht der Steuersequenz entspricht, kann die dem Schrittmotor 1 zugeführte Stromstärke, wie in B210 gezeigt, erhöht werden. So kann erreicht werden, dass der Schrittmotor 1 mit ausreichender Stromstärke betrieben wird.

Weiterhin kann es in diesem Fall notwendig sein, den Schrittmotor 1 mit einer Korrektursequenz anzusteuern, wie in B212 gezeigt. Hierdurch können für ein menschliches Auge wahrnehmbare Störungen bei der Projektion der Lasermarkierung verhindert und/oder korrigiert werden.

Anschließend kann das Verfahren in B202 mit dem Ansteuern des Schrittmotors 1 mit einer weiteren Steuersequenz fortgesetzt werden.

Das in Fig. 2 dargestellte Verfahren ermöglicht den Betrieb eines Rotationsbaulasers mit dem Schrittmotor 1 mit Regelung der dem Schrittmotor 1 zugeführten Stromstärke auf einen möglichst niedrigen Wert. Störungen, die durch eine zu geringe Stromversorgung verursacht sein können, werden durch die Korrektursequenz korrigiert.

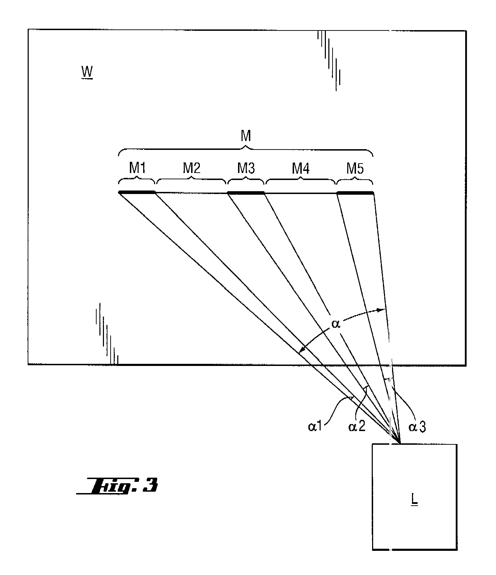

Fig. 3 zeigt eine durch einen Rotationsbaulaser L mit Schrittmotor erzeugbare Markierung M auf einer Wand W. Die Markierung M folgt einer Linie und weist fünf Markierungsabschnitte M1, M2, M3, M4 und M5 auf. Die fett dargestellten Markierungsabschnitte M1, M3 und M5 weisen dabei eine größere Helligkeit und damit eine bessere Sichtbarkeit als die Markierungsabschnitte M2 und M4 auf.

Ein durch den Rotationsbaulaser L ausgesendeter Laserstahl wird zur Erzeugung der Markierung M in einem durch einen Belichtungswinkel α beschriebenen Ausleuchtungsbereich verwendet. Die Teilbelichtungswinkel α1, α2 und α3 werden dabei häufiger und/oder langsamer von dem Laserstrahl durchlaufen als übrige Teile des Winkels α, sodass die Markierungsabschnitte M1, M3 und M5 heller erscheinen und eine bessere Sichtbarkeit aufweisen als die Markierungsabschnitte M2 und M4.

## Patentansprüche

1. Rotationsbaulaser mit:
einer um eine Rotationsachse drehbar gelagerten Umlenkvorrichtung zum Aussenden von Laserlicht; und
einem Schrittmotor (1) zum Drehen der Umlenkvorrichtung um die Rotationsachse.

2. Rotationsbaulaser nach Anspruch 1, wobei der Schrittmotor (1) einen Rotor aufweist, und
eine Steuervorrichtung zum Ansteuern des Schrittmotors durch eine Steuervorgabe vorgesehen ist, wobei die Steuervorgabe einen Drehwinkel (α, α1, α2, α3), und/oder eine Drehrichtung und/oder eine Drehgeschwindigkeit und/oder eine Anzahl von Drehschritten für den Rotor vorgibt.

3. Rotationsbaulaser nach Anspruch 2, wobei die Steuervorrichtung eine Steuersequenz mit einer oder mehreren Steuervorgaben regelmäßig und mit einer vorgebbaren Repetierfrequenz wiederholt.

4. Rotationsbaulaser nach Anspruch 3, wobei die Repetierfrequenz derart vorgegeben ist, dass eine durch das ausgesendete Laserlicht erzeugte Markierung (M) für das menschliche Auge im Wesentlichen flimmerfrei wahrnehmbar ist.

5. Rotationsbaulaser nach einem der Ansprüche 2 bis 4, wobei eine Intensität des Laserlichts in Abhängigkeit von der Steuervorgabe und/oder der Repetierfrequenz bestimmbar ist.

6. Rotationsbaulaser nach einem der vorstehenden Ansprüche, wobei ein Übertragungsriemen vorgesehen ist, welcher ein durch den Schrittmotor (1) erzeugtes Drehmoment auf die Umlenkvorrichtung überträgt.

7. Rotationsbaulaser nach Anspruch 6, wobei
der Rotor mit einer Antriebswelle gekoppelt ist, wobei die Antriebswelle eine erste Riemenscheibe aufweist;
die Umlenkvorrichtung eine Rotationswelle (3) mit einer zweiten Riemenscheibe (2) aufweist; und wobei
der Übertragungsriemen das Drehmoment von der ersten Riemenscheibe auf die zweite Riemenscheibe (2) überträgt.

8. Rotationsbaulaser nach Anspruch 7, wobei der Übertragungsriemen ein Zahnriemen, insbesondere ein Kerbzahnriemen ist und wobei die erste und die zweite Riemenscheibe (2) jeweils Zahnriemenscheiben sind.

9. Rotationsbaulaser nach Anspruch 8, wobei eine erste Anzahl von Zähnen der ersten Zahnriemenscheibe und eine zweite Anzahl von Zähnen der zweiten Zahnriemenscheibe (2) derart gewählt sind, dass ein Untersetzen einer Drehzahl des Rotors im Wesentlichen von 20:60 erreicht wird.

10. Rotationsbaulaser nach einem der vorstehenden Ansprüche, wobei eine Überwachungsvorrichtung vorgesehen ist, welche eine Rotation der Umlenkvorrichtung überwacht.

11. Rotationsbaulaser nach Anspruch 10, wobei die Überwachungsvorrichtung eine mit der Rotationswelle (3) oder der Antriebswelle gekoppelte Codierscheibe mit optischer, elektrischer, magneto-elektrischer oder mechanischer Abtastung aufweist.

12. Rotationsbaulaser nach Anspruch 10 oder 11, wobei eine Regelungsvorrichtung zum Regeln der Rotation der Umlenkvorrichtung auf Basis eines Signals der Überwachungsvorrichtung vorgesehen ist.

13. Rotationsbaulaser nach Anspruch 12, wobei das Regeln durch Anpassen einer Stromstärke eines dem Schrittmotor (1) zugeführten Stroms und/oder durch Vorgeben einer Korrektursequenz, welche eine oder mehrere Steuervorgaben umfasst, durch die Steuervorrichtung vorgenommen wird.

14. Rotationsbaulaser nach Anspruch 13, wobei die Regelungsvorrichtung ganz oder teilweise in die Steuervorrichtung integriert ist.

15. Verfahren zum Betrieb eines Rotationsbaulasers, welcher eine um eine Rotationsachse drehbar gelagerte Umlenkvorrichtung zum Aussenden von Laserlicht und einen Schrittmotor (1) zum Drehen der Umlenkvorrichtung um die Rotationsachse aufweist, umfassend:
Ansteuern (B202) des Schrittmotors durch regelmäßiges und mit einer vorgebbaren Repetierfrequenz wiederholtes Vorgeben einer Steuersequenz, welche eine oder mehrere Steuervorgaben eines Drehwinkels und/oder einer Drehrichtung und/oder eine Drehgeschwindigkeit und/oder einer Anzahl von Drehschritten für den Schrittmotor (1) umfasst;
wobei die Steuersequenz und die Repetierfrequenz derart gewählt sind, dass beim Drehen der Umlenkvorrichtung um die Rotationsachse das Laserlicht einen oder mehrere vorbestimmte Ausleuchtungsbereiche häufiger und/oder langsamer durchläuft als andere Bereiche.

16. Verfahren nach Anspruch 15, umfassend:
Überwachen (B204) des Drehens der Umlenkvorrichtung; und
Erhöhen einer Stromstärke (B210) eines dem Schrittmotor (1) zugeführten Stroms, wenn das Drehen der Umlenkvorrichtung nicht der Steuersequenz entspricht.

17. Verfahren nach Anspruch 15 oder 16, umfassend:
Überwachen des Drehens der Umlenkvorrichtung; und
Ansteuern (B212) des Schrittmotors (1) durch eine Korrektursequenz von Steuervorgaben, wenn das Drehen der Umlenkvorrichtung nicht der Steuersequenz entspricht;
wobei die Korrektursequenz derart gewählt ist, dass für ein menschliches Auge wahrnehmbare Störungen verhindert und/oder korrigiert werden.
